(19) Europäisches Patentamt
European Patent Office
Office européen des brevets

(11) **EP 1 585 979 B1**

(12) **EUROPÄISCHE PATENTSCHRIFT**

(45) Veröffentlichungstag und Bekanntmachung des Hinweises auf die Patenterteilung:
**22.12.2010  Patentblatt 2010/51**

(21) Anmeldenummer: **04702307.2**

(22) Anmeldetag: **15.01.2004**

(51) Int Cl.:
*G01N 21/896* (2006.01)   *G01N 21/64* (2006.01)
*G01N 21/47* (2006.01)

(86) Internationale Anmeldenummer:
**PCT/EP2004/000251**

(87) Internationale Veröffentlichungsnummer:
**WO 2004/065947 (05.08.2004 Gazette 2004/32)**

(54) **VERFAHREN ZUR OPTISCHEN KONTROLLE EINER AUF EINER FARBLICH GEMUSTERTEN OBERFLÄCHE AUFGEBRACHTEN DURCHSICHTIGEN SCHUTZSCHICHT**

METHOD FOR OPTICALLY CONTROLLING A TRANSPARENT PROTECTIVE LAYER ARRANGED ON A COLOURED PATTERNED SURFACE

PROCEDE DE CONTROLE OPTIQUE D'UNE COUCHE PROTECTRICE TRANSPARENTE APPLIQUEE SUR UNE SURFACE A MOTIFS COLORES

(84) Benannte Vertragsstaaten:
**AT BE BG CH CY CZ DE DK EE ES FI FR GB GR HU IE IT LI LU MC NL PT RO SE SI SK TR**

(30) Priorität: **19.01.2003  DE 10301931**

(43) Veröffentlichungstag der Anmeldung:
**19.10.2005  Patentblatt 2005/42**

(73) Patentinhaber: **Baumer Innotec AG**
**8500 Frauenfeld (CH)**

(72) Erfinder:
• **MASSEN, Robert**
**78337 Öhningen-Wangen (DE)**
• **DETINKIN, Igor**
**78464 Konstanz (DE)**
• **DIEHL, Hans-Peter**
**78462 Konstanz (DE)**

(74) Vertreter: **Prinz & Partner**
**Patentanwälte**
**Rundfunkplatz 2**
**80335 München (DE)**

(56) Entgegenhaltungen:
**EP-A1- 1 016 862      JP-A- 2000 094 402**
**US-A- 4 725 139      US-A- 5 459 330**
**US-A1- 2002 135 758   US-A1- 2003 011 760**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur optischen Kontrolle einer durchsichtigen Schutzschicht und einer farblich gemusterten Oberfläche, wobei die durchsichtige Schutzschicht zumindest teilweise die farblich gemusterte Oberfläche bedeckt, mit einer ersten Beleuchtungsquelle und mit einem der ersten Beleuchtungsquelle zugeordneten bildgebenden Sensor.

Die vorliegende Erfindung betrifft ferner eine Verwendung einer Anordnung zur optischen Kontrolle einer durchsichtigen Schutzschicht und einer farblich gemusterten Oberfläche, bei der die durchsichtige Schutzschicht zumindest teilweise die farblich gemusterte Oberfläche bedeckt und die eine erste Beleuchtungsquelle, deren Emissionsspektrum kurzwelliges sichtbares Licht umfaßt, und einen der ersten Beleuchtungsquelle zugeordneten bildgebenden Sensor, aufweist.

Die automatische optische Kontrolle von ebenen, mehrfarbigen Oberflächen mit Hilfe spezieller Kameras, Beleuchtungseinrichtungen und Mustererkennungs-und Bildverarbeitungsrechner ist bereits aus vielen Produktionszweigen wie beispielsweise aus der keramischen Industrie oder aus der Holzindustrie bekannt.

Es ist ebenfalls bekannt, diese Oberflächen gleichzeitig mit Hilfe unterschiedlicher Kameras und Beleuchtungssysteme zu erfassen, um sowohl die ästhetischen Fehler in der Farbgebung (Kontaminationen, Farbabweichungen usw.) als auch die physikalischen Fehler der Oberfläche (Beulen, Kratzer, Unebenheiten, Glanzfehler) zu erkennen. Typisch ist die optische Erfassung mit einer oder mehreren Farbkameras bei diffuser Auflichtbeleuchtung und mit einer oder mehreren getrennten schwarz-weiß Kameras, welche gerichtetes, an der Oberfläche gespiegeltes Licht von einer Beleuchtungsquelle erfassen.

In der deutschen Patentschrift DE 196 09 045 C1 wird eine Erweiterung zu einer sogenannten multisensoriellen Kamera für die Inspektion von Holzprüflingen beschrieben, bei welcher die verschiedenen Kameras und Beleuchtungsquellen nicht mehr getrennt die Oberfläche an unterschiedlichen Stellen beobachten, sondern durch eine gemeinsame Optik die gleiche Stelle der Oberfläche erfassen, welche von unterschiedlichen Beleuchtungsquellen beleuchtet wird und von unterschiedlichen, den Beleuchtungsquellen jeweils zugeordneten Bildsensoren beobachtet wird.

US 5,459,330 offenbart ein Verfahren und eine Vorrichtung zur Inspektion von Glas. Hierfür wird ein Laserstrahl senkrecht auf die Glasoberfläche geleitet. Das an der Oberfläche, möglichen Fremdkörpern und an der unteren Oberfläche reflektierte Licht wird von einer Kamera detektiert.

US 4,725,139 offenbart eine Methode zur Erkennung von Defekten auf der Oberfläche oder im Innern von transparenten Materialien. Dazu wird ein Lichtstrahl auf die Oberfläche des transparenten Materials gerichtet, der zum Teil an der Oberfläche reflektiert wird und zum Teil in das Material eindringt. Die Eindringtiefe wird durch geeignete Wahl der Wellenlänge bestimmt.

US 2003/0011760 A1 offenbart ein System und eine Methode zur optischen Kontrolle von Halbleiter-Wafern. Dabei werden zwei Lichtstrahlen auf die Oberfläche gerichtet, die jeweils für eine andere Sorte von Defekten optimiert sind.

US 2002/0135758 A1 offenbart eine Methode zur Quantifizierung von Strukturdefekten in dünnen transparenten Schichten. Den Schichten werden hierfür Farbträger bzw. Leuchtstoffe beigesetzt. Vor, während und/oder nach einem die Struktur verändernden Test, wird die Schicht mit Licht einer vorbestimmten Wellenlänge bestrahlt und die vom Prüfling abgegebene Strahlung ausgewertet.

EP 1 016 862 A1 offenbart eine Methode zum Erkennen von Fehlwachstumsstellen oder Einschlüssen in einer Oberflächenbeschichtung, beispielsweise einer Wärmeschutzschicht, mit Hilfe einer Schwarzlicht-Lampe.

JP 2000094402 offenbart eine Methode zum Erkennen von Defekten wie Wurmlöcher oder Risse in einem für eine Laminatplatte verwendeten Furnier. Es werden fluoreszierende Partikel aufgetragen und mit Schwarzlicht beleuchtet. Die Fluoreszenz kann dann mit bloßem Auge beobachtet und Fehlstellen leichter erkannt werden.

Die optische Prüfung hat nicht nur den Zweck, fehlerhafte Produkte auszusondern oder die Produkte bestimmten Qualitätsklassen zuzuordnen, sondern auch die unterschiedlichen Fehlerklassen anzuzeigen und damit dem Maschinenführer die Informationen zu liefern, die er zum Einstellen des Produktionsprozesses benötigt, um die Fehler zu verringern. Hierzu ist es erforderlich, die Fehler nicht nur zu detektieren, sondern auch zu klassifizieren, d.h. den detektierten Fehler zu identifizieren.

Die bekannten Systeme sind jedoch nicht in der Lage, diese Aufgabe zufriedenstellend bei ein- oder mehrfarbig gemusterten Oberflächen zu erfüllen, die mit einer transparenten Schutzschicht versehen sind. Dazu gehören beispielsweise mehrfarbige Laminatböden, bei welchen auf einem Träger aus einer Faserplatte eine kunstvoll mit einem Holz-, Stein- oder sonstigem Dekor bedruckte Folie aufgelegt wird und über diese Folie eine oder mehrere transparente sogenannte Overlay-Folien aufgebracht werden. Diese können z.B. aus einer Mischung aus Melamin und Korund bestehen und sichern die Abriebfestigkeit, Härte und Wasserfestigkeit des Bodenbelages.

Es gibt auch Laminatböden, bei welchen eine mehrfarbig bedruckte Kunststofffolie auf einem Kunststoffträger aufgebracht wird und diese Anordnung wieder mit einer oder mehreren durchsichtigen, aber widerstandsfähigen Schutzschichten versehen wird. Es sind auch Oberflächen bekannt, bei welchen die durchsichtige Schutzschicht flüssig aufgebracht wird und dann aushärtet. Im folgenden werden alle diese Oberflächen unter dem Oberbegriff "Laminate" zusammengefaßt.

Die optische Kontrolle wird dadurch erschwert, daß zahlreiche Laminatböden mit einer eingeprägten Struktur versehen werden, um die Oberflächeneigenschaften natürlicher Materialien wie Holz und Naturstein nachzuahmen. Damit ist die Oberfläche der Schutzschicht nicht mehr eben.

Die bekannten Anordnungen zur optischen Kontrolle der durchsichtigen Schutzschichten und der farblich gemusterten Oberflächen mit Farbkameras und zugeordneter diffuser Auflichtbeleuchtung sowie mit schwarz-weiß Kameras, welche das reflektierte Licht einer gerichteten Auflichtbeleuchtung erfassen, beschränken sich bei diesen Laminaten auf die Erkennung von Farbfehlern und Versatz des Dekors sowie die Erkennung der physikalischen Fehler der durchsichtigen Schutzschicht.

Diese Anordnungen sind aber nicht in der Lage, schwache Fehler, wie trübe Stellen, im Innern der durchsichtigen Schutzschicht zu erkennen und als solche zu identifizieren.

Die diffuse Auflichtbeleuchtung wird in ihrer ungerichteten Reflexion stark von der farbigen Dekorfolie moduliert, aber kaum von typischen Fehlern innerhalb der transparenten Schutzschicht, wie beispielsweise schwacher Milchigkeit oder lokal abgerissener Schutzschicht. Eine leicht milchige Transparenz verändert zwar schwach die Sättigung der zu kontrollierenden Farbdekore, aber durch die Bemühungen, den Dekordruck möglichst naturtreu aussehen zu lassen, enthalten die Dekordrucke eine große Bandbreite an Sättigungswerten, so daß eine durch die Milchigkeit der Schutzschicht hervorgerufene schwache Sättigung nicht von den bewußt im Dekordruck vorhandenen Sättigungsunterschieden unterschieden werden kann.

Die schwarz-weiß Kamera, die das an die Oberfläche reflektierte Licht einer gerichteten Auflichtbeleuchtung erfaßt, kann zwar lokale Fehler im Glanz und in der Unversehrtheit der Oberfläche erfassen. Diese Beleuchtung dringt aber kaum in die durchsichtige Schutzschicht ein und wird somit auch wenig oder gar nicht aufgrund von Fehlern innerhalb der Schutzschicht verändert. Viele Laminatböden werden zudem mit mechanisch in die Schutzschicht eingeprägten Oberflächenmustern hergestellt. In diesem Fall ist es für ein in Reflexion beobachtendes Kamerasystem praktisch unmöglich, Fehler im Innern der Schutzschicht zu erfassen. Selbst grobe Fehler in der Schutzschicht, wie beispielsweise komplette lokale Abrisse der transparenten Schutzschicht, werden nicht zuverlässig erkannt.

Die bekannten Systeme zur optischen Kontrolle von Laminaten können daher nur einen Teil der Produktionsfehler erfassen und die erfaßten Produktionsfehler auch nur ungenügend identifizieren. Angesichts der großen Menge an weltweit hergestellten Oberflächen besteht ein hohes wirtschaftliches Interesse an einem Verfahren zur optischen Kontrolle von Oberflächen, durch das neben den Fehlern im Dekor und an der Oberfläche der durchsichtigen Schutzschicht gleichzeitig auch Fehler im Innern der durchsichtigen Schutzschicht zuverlässig erkannt werden können.

Gemäß Anspruch 1 wird zur Erkennung von fehlerhaften Stellen im Innern der durchsichtigen Schutzschicht die Schutzschicht mit von der Beleuchtungsquelle emittiertem Licht beleuchtet, wobei die Beleuchtungsquelle kurzwelliges Licht mit einem Wellenlängenbereich im unmittelbar an den von dem bildgebenden Sensor (42) nicht mehr erfassten Ultraviolett-Bereich anschließenden Blau-Bereich emittiert und das auf die Oberfläche auftreffende Licht zumindest teilweise in die Schutzschicht eindringt und an den fehlerhaften Stellen gestreut wird. An den fehlerhaften Stellen rückgestreutes Licht wird von dem bildgebenden Sensor erfaßt, und die fehlerhaften Stellen werden durch die lokale Zunahme der Intensität des von dem bildgebenden Sensor erfaßten Lichts im Bereich der fehlerhaften Stellen erkannt. Der Anteil des an den fehlerhaften Stellen gestreuten Lichts ist umso größer, je kurzwelliger das Licht ist, so daß eine Beleuchtungsquelle gewählt wird, deren Emissionsspektrum den für den bildgebenden Sensor kurzwelligen sichtbaren Bereich umfaßt. Auf diese Weise können fehlerhafe Stellen im Innern der Schutzschicht zuverlässig erkannt werden.

Um den Einfluß einer Prägung der Oberfläche zu minimieren, werden gemäß einer bevorzugten Variante des Verfahrens die Beleuchtungsquelle und der der Beleuchtungsquelle zugeordnete bildgebende Sensor senkrecht über der Oberfläche der durchsichtigen Schutzschicht angeordnet.

Gemäß einer weiteren bevorzugten Variante des erfindungsgemäßen Verfahrens ist eine zweite Beleuchtungsquelle vorgesehen, die Licht mit einer ersten Wellenlänge emittiert, das die Schutzschicht zur Fluoreszenz von Licht mit einer zweiten, von der ersten Wellenlänge unterschiedlichen Wellenlänge anregt. Das Fluoreszenzlicht wird durch einen der zweiten Beleuchtungsquelle zugeordneten bildgebenden Sensor erfaßt. Fehlerhafte Stellen in der durchsichtigen Schutzschicht werden dann anhand der lokalen Änderungen der Intensität des Fluoreszenzlichts erkannt, da beispielsweise in Bereichen, in denen überhaupt keine Schutzschicht vorhanden ist, auch kein Fluoreszenzlicht vom bildgebenden Sensor erfaßt wird. Zur Erfassung des Fluoreszenzlichts weist der der zweiten Beleuchtungsquelle zugeordnete bildgebende Sensor bevorzugterweise im Wellenlängenbereich der zweiten Wellenlänge eine höhere Empfindlichkeit auf als im Wellenlängenbereich der ersten Wellenlänge. Dadurch erscheinen Stellen mit intakter Schutzschicht, wenn der bildgebende Sensor beispielsweise eine schwarz-weiß Kamera ist, heller als Stellen mit fehlender Schutzschicht.

Gemäß einer weiteren bevorzugten Variante des Verfahrens wird zur Anregung des Fluoreszenzlichts und zur Erkennung von fehlerhaften Stellen im Innern der durchsichtigen Schutzschicht mittels Streuung an den fehlerhaften Stellen dieselbe Beleuchtungsquelle verwendet. Für die Beleuchtung des zu kontrollierenden Materials können beispielsweise sogenannte Schwarzlicht-Lampen eingesetzt werden, welche sowohl einen die Fluoreszenz der Schutzschicht anregenden Ultraviolett-Anteil besitzen als auch einen kurzwelligen sichtbaren Anteil abstrahlen. Damit können mit einer einzigen Beleuchtungsquelle und einer einzigen Kamera sowohl die Milchigkeitsdefekte im Innern der durchsichtigen Schutzschicht anhand der lokal höheren Streuung als helle Bildstellen erkannt werden als auch das lokale Fehlen der durchsichtigen Schutzschicht infolge der lokal fehlenden Fluoreszenz als dunkle Stellen auf einem insgesamt leicht hellen Hintergrund erkannt werden.

Eine weitere bevorzugte Variante des Verfahrens sieht vor, daß zusätzlich zu den bzw. dem bildgebenden Sensor(en) zur Erfassung des Fluoreszenzlichts bzw. des rückgestreuten Lichts farbfähige bildgebende Sensoren verwendet werden, durch die Farbfehler in der von der durchsichtigen Schutzschicht zumindest teilweise bedeckten farblich gemusterten Oberfläche erfaßt werden. Zusätzlich dazu kann zur Erfassung von Fehlern an der Oberfläche der durchsichtigen Schutzschicht eine dritte Beleuchtungsquelle vorgesehen sein, die einen gerichteten Lichtstrahl emittiert, der an der Oberfläche der Schutzschicht reflektiert wird und von einem der dritten Beleuchtungsquelle zugeordneten bildgebenden Sensor erfaßt wird. Fehler an der Oberfläche können dann durch lokale Änderungen der Intensität des von dem bildgebenden Sensor erfaßten reflektierten Lichts erkannt werden. Dadurch werden alle diejenigen Fehler der Oberfläche der Schutzschicht erfaßt, welche entweder den beleuchtenden Lichtstrahl unter einem anderen als dem Einfallswinkel abstrahlen (z.B. Beulen und Dellen) oder aber unter dem gleichen Winkel, aber mit veränderter Intensität abstrahlen (z.B. lokal zu matten oder zu glänzenden Stellen).

Die vorliegende Erfindung stellt ferner eine Verwendung einer Anordnung gemäß Anspruch 17 zur optischen Kontrolle von Oberflächen bereit, mittels der Fehler im Innern der durchsichtigen Schutzschicht zuverlässig erkannt werden können.

Gemäß der Anordnung ist eine erste Beleuchtungsquelle vorgesehen und ein der ersten Beleuchtungsquelle zugeordneter bildgebender Sensor, wobei das an den fehlerhaften Stellen im Innern und unterhalb der durchsichtigen Schutzschicht rückgestreute Licht von dem bildgebenden Sensor erfaßt wird und wobei mittels des bildgebenden Sensors die fehlerhaften Stellen durch die lokale Zunahme der Intensität des von dem bildgebenden Sensor erfaßten Lichts im Bereich der fehlerhaften Stellen erkannt werden können.

Weitere Merkmale und Vorteile der Erfindung ergeben sich aus den Unteransprüchen sowie aus der nachfolgenden Beschreibung mehrerer bevorzugter Ausführungsbeispiele, die in den beigefügten Zeichnungen dargestellt sind. In diesen zeigen:

-    Figur 1 schematisch eine Anordnung mit einer Farbzeilenkamera, einer diffusen Auflichtbeleuchtung und einer schwarz-weiß Zeilenkamera, die das reflektierte Licht einer gerichteten Beleuchtung erfaßt,

-    Figur 2 schematisch anhand eines Querschnitts durch einen geprägten, mit einer durchsichtigen Schutzschicht versehenen Laminatboden, daß Fehler im Innern der Schutzschicht weder durch den sogenannten Reflexionskanal noch durch den sogenannten Farbkanal erfaßt werden können,

-    Figur 3 beispielhaft, daß schwache Milchigkeitsfehler im Innern einer geprägten, durchsichtigen Schutzschicht erfaßt werden, wenn diese mit kurzwelligem Licht diffus bestrahlt wird und das gestreute Licht bildgebend erfaßt wird,

-    Figur 4 beispielhaft, daß lokale Abrisse der durchsichtigen Schutzschicht anhand der lokal fehlenden Fluoreszenz der mit einer UV-nahen Strahlung beleuchteten Oberfläche bildhaft erfaßt werden können, ohne daß die Erkennung durch die mechanische Prägung behindert wird,

-    Figur 5 schematisch das Emissionsspektrum einer Beleuchtungsquelle, durch die gleichzeitig die durchsichtige Schutzschicht zur Fluoreszenz angeregt werden kann als auch durch wellenlängenabhängige Streuung an Streuzentren im Innern der Schutzschicht Fehler im Innern der durchsichtigen Schutzschicht erkannt werden können, zusammen mit der Empfindlichkeitskennlinie des zugeordneten bildgebenden Sensors,

-    Figuren 6a und 6b beispielhaft, wie die gegenseitige optische Isolierung der verschiedenen Beleuchtungsquellen und der den Beleuchtungsquellen zugeordneten Kameras einmal durch Abschirmung und einmal durch eine unterschiedliche spektrale Auslegung des Wellenlängenbereichs des sogenannten Reflexionskanals und des sogenannten "Overlay-Kanals" erreicht werden kann.

Wir bezeichnen im folgenden mit "Farbkanal" die Anordnung einer Farbkamera und einer diffus strahlenden Beleuchtungsquelle, mit "Reflexkanal" die Anordnung einer schwarz-weiß Kamera und einer Beleuchtungsquelle mit gerichtetem Lichtstrahl und mit "Overlay-Kanal" die erfindungsgemäße Anordnung einer spektral abgestimmten kurzwelligen Beleuchtungsquelle und einer Kamera zur Erkennung von Fehlern im Innern der durchsichtigen Schutzschicht sowie zur Erkennung von Bereichen, in denen die Schutzschicht vollständig fehlt.

Gemäß des bevorzugten Ausführungsbeispiels werden Kameras zur bildgebenden Erfassung von Laminatböden verwendet. Selbstverständlich ist der Erfindungsgedanke nicht auf die Verwendung von Kameras eingeschränkt, sondern umfaßt alle Arten von bildgebenden Sensoren, insbesondere auch punktförmig die Laminatoberfläche abtastende Scanner, sogenannte optische Kontaktzeilensensoren und andere bildgebende Sensoren, wie sie dem Fachmann der Optik und der Bildverarbeitung bekannt sind.

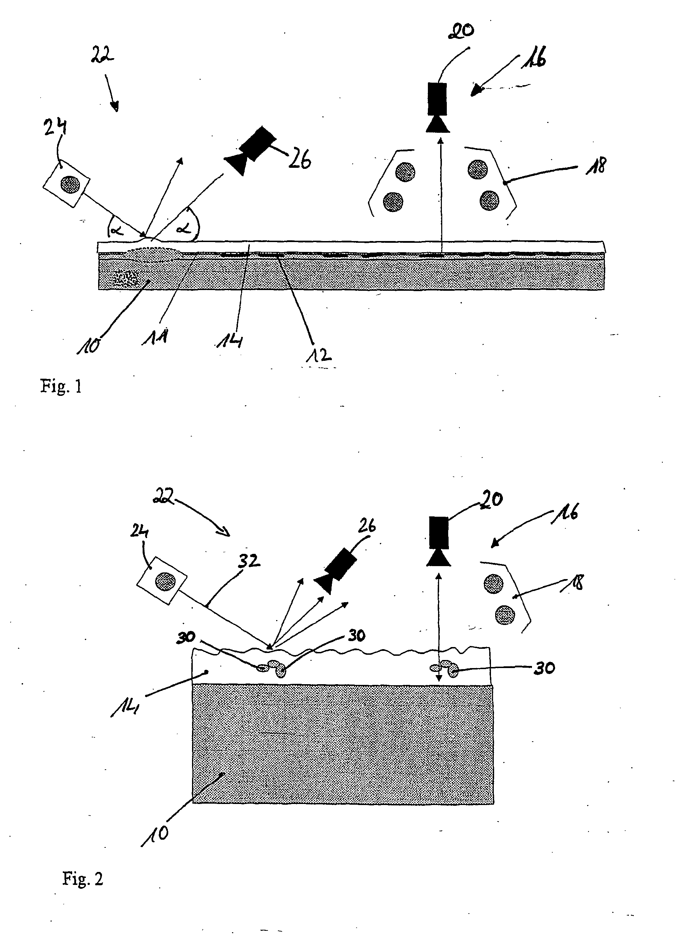

Figur 1 zeigt vereinfacht einen typischen Laminataufbau, der ein Trägermaterial 10 (bei Fußbodenlaminaten meistens eine mittel- oder hochdichte Faserplatte, bei Laminaten aus Kunststoff eine mehrere Millimeter dicke Kunststofffolie) aufweist. Auf diesem Träger ist eine dünne, mehrfarbig bedruckte Papier- oder Kunststofffolie 11 aufgepreßt, deren Oberfläche 12 das typische Erscheinungsbild, beispielsweise einer Holzstruktur, einer Marmor- oder Natursteinnachbildung, trägt. Hierauf folgt eine durchsichtige Schutzschicht 14, die sogenannte Overlay-Folie, welche eine harte, trittfeste und abriebfeste Laminatoberfläche bildet.

Es ist bekannt, beispielsweise von Systemen zur Inspektion von keramischen Fliesen (CeraVision® , Firma MASSEN machine vision systems GmbH), die Fehler im Dekor mit einer Farbkamera und einer rechnergestützten Farbbildauswertung zu detektieren. Hierzu wird die Oberfläche diffus mit einer Weißlichtquelle beleuchtet und die lokale Farbmusterung mit einer vorher an einer Referenz gelernten Farbstatistik verglichen. Diese Anordnung wird als "Farbkanal" bezeichnet. Eine derartige Anordnung ist mit dem Bezugszeichen 16 in den Figuren 1 und 2 abgebildet. Die Weißlichtquelle hat das Bezugszeichen 18 und die Farbkamera das Bezugszeichen 20.

Es ist ebenfalls bekannt, beispielsweise aus der Inspektion keramischer Fliesen, die Oberfläche zusätzlich mit einer gerichteten Lichtquelle zu beleuchten und mit einer die Oberfläche unter dem gleichen Winkel erfassenden schwarz-weiß Kamera zu beobachten. Dadurch werden alle diejenigen Fehler der Oberfläche der Schutzschicht erfaßt, welche entweder den beleuchtenden Lichtstrahl unter einem anderen als dem Einfallswinkel abstrahlen (z.B. Beulen und Dellen) oder aber unter dem gleichen Winkel, aber mit veränderter Intensität abstrahlen (z.B. lokal zu matten oder zu glänzenden Stellen). Diese Anordnung wird als "Reflexkanal" bezeichnet. Eine derartige Anordnung ist mit dem Bezugszeichen 22 in den Figuren 1 und 2 abgebildet. Die Lichtquelle hat das Bezugszeichen 24 und die schwarz-weiß Kamera das Bezugszeichen 26. Die Lichtquelle 24 und die schwarz-weiß Kamera 26 sind in diesem Ausführungsbeispiel unter dem gleichen Winkel α bezüglich der Oberfläche des Laminats angeordnet.

Fehler 30 im Innern der Schutzschicht 14 werden, wie in Figur 2 dargestellt, vom Reflexkanal 22 nicht erkannt, weil der beleuchtende Lichtstrahl 32 bereits an der Oberfläche reflektiert wird. Sogar lokal fehlendes Overlay (ein sog. Overlay-Platzer) wird oft nicht vom Reflexkanal 22 erkannt, insbesondere bei Laminaten mit einer zufällig geprägten Oberfläche, welche im Reflexkanal 22 ein hohes Grundrauschen erzeugt.

Typische Fehler 30 wie beispielsweise leichte Milchigkeit und Melaninflecke im Innern der Schutzschicht 14 werden in der Regel auch nicht von der Farbkamera 20 erkannt, weil diese Fehler 30 die lokalen, durch die durchsichtige Schutzschicht 14 beobachteten Farben nur wenig verändern, so daß diese trotz dieser Fehler 30 immer noch mit der gelernten Farbstatistik übereinstimmen. Da viele Laminatoberflächen aus zufälligen Mustern bestehen und der Druck der Dekorfolie durch bewußtes Verschieben der Druckzylinder sowie bewußt fehlende Synchronisation zwischen den einzelnen Farbwerken zufällig gestaltet wird, kann kein direkter Bild-zu-Bild Vergleich durchgeführt werden, sondern es muß von dem Modell einer statistischen Farbmusterverteilung ausgegangen werden.

Es ist daher mit den bekannten Oberflächeninspektionsverfahren nicht möglich, Fehler 30 im Innern der durchsichtigen Schutzschicht 14 zu erkennen. Bei geprägten Laminaten kann sogar lokal vollständig fehlendes Overlay nicht zuverlässig erkannt werden.

Gemäß der vorliegenden Erfindung kann die Laminatoberfläche so bildhaft erfaßt werden, daß sowohl bei nicht geprägten als auch bei geprägten Laminaten Fehler 30 im Innern der durchsichtigen Schutzschicht 14 bis hin zum vollständigen lokalen Fehlen der Schutzschicht 14 mit hoher Zuverlässigkeit erkannt werden. Hierzu werden erfindungsgemäß zwei unterschiedliche physikalische Effekte ausgenutzt.

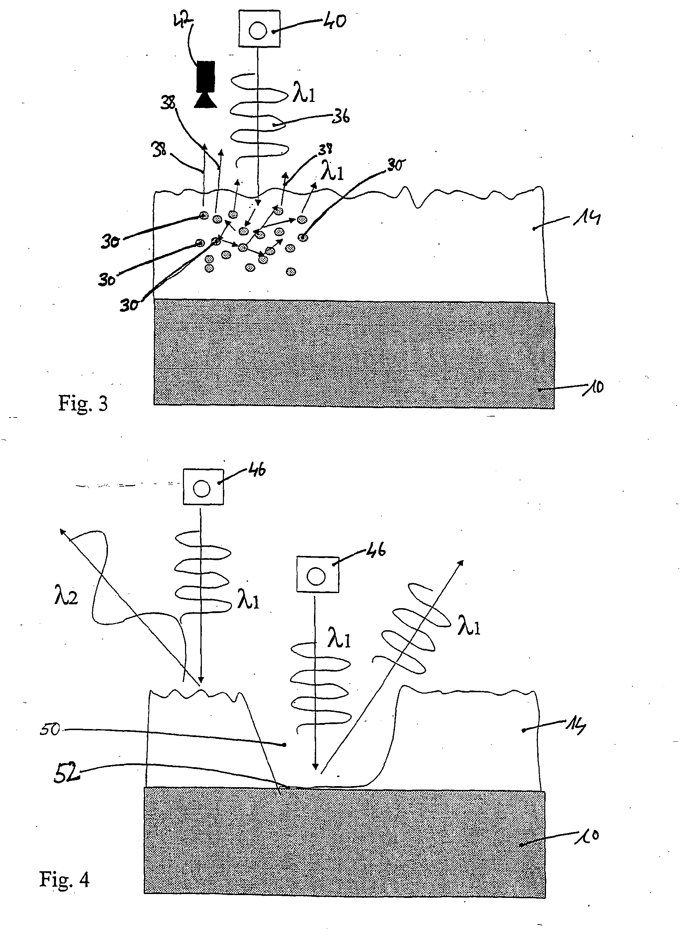

Wie Figur 3 zeigt, kann die Milchigkeit der durchsichtigen Schutzschicht 14 (welche z.B. durch ungenügende Preßtemperatur und Preßdruck entsteht) als ein Streumodell beschrieben werden. Die einzelnen, undurchsichtigen mikroskopischen Partikel 30 streuen das eindringende Licht 36 und reflektieren einen großen Anteil 38 zurück in die beobachtende Kamera. Sind die mikroskopischen Partikel 30 klein im Vergleich zu der Wellenlänge $\lambda_1$ des gestreuten Lichts, wie dies hier der Fall ist, wächst die Streuung im Innern eines Materials mit der vierten Potenz des Kehrwerts der Wellenlänge:

$$I(streu) \sim 1/\lambda^4.$$

Es wird daher erfindungsgemäß eine Beleuchtungqquelle 40 mit einem Wellenlängenbereich $\lambda_1$ gewählt, welcher so kurzwellig wie möglich ist. Dies ist zweckmäßigerweise der unmittelbar an den von der Kamera nicht mehr erfaßten Ultraviolett-Bereich anschließende Blau-Bereich. Bevorzugterweise wird die das rückgestreute Licht 38 erfassende Kamera 42 mit einem optischen Bandpaßfilter ausgestattet, welcher nur den Wellenlängenbereich $\lambda_1$ dieses auf die Streuung im Innern der Schutzschicht 14 hin optimierten Bereichs durchläßt und andersfarbiges Fremdlicht aussperrt. Bevorzugterweise wird die Kamera 42 zur Erfassung der Streuung vorzugsweise senkrecht über dem Laminat angeordnet und die Beleuchtung 40 ebenfalls senkrecht angeordnet, um den Einfluß einer Prägung der Oberfläche zu minimieren. Erfindungsgemäß wird die kurzwellige Beleuchtung 36 zumindest teilweise diffus ausgestaltet, um den optischen Einfluß der Oberflächenprägung auf das erfaßte Streubild zu minimieren.

Mit diesem Verfahren und dieser Anordnung können alle Fehler 30 im Innern und unterhalb (im Beispiel des Laminatbodens von Figur 2 an der Grenzfläche zwischen der durchsichtigen Schutzschicht und der bedruckten Papier- oder Kunststoffolie) der durchsichtigen Schutzschicht 14 erkannt werden, welche auf Streueffekte im Innern und unterhalb der durchsichtigen Schutzschicht 14 zurückzuführen sind. Streuende Partikel unterhalb der Schutzschicht können z.B. von Melaninresten stammen, welche zwischen der transparenten Overlay-Folie und dem farbigen Dekorpapier verblieben sind.

Während streuende Partikel im Innern der durchsichtigen Schutzschicht das eindringende diffuse, kurzwellige Licht rückstreuen, führt dieser Effekt auch zu einer Verbreiterung des Bildes einer aufprojizierten Lichtlinie durch einen mit der Streuung anwachsenden Lichthof. Dieser Effekt wird in dem oben bereits genannten deutschen Patent DE 196 09 045 C1 als "Lichthof-Effekt" bezeichnet und dort eingesetzt, um die lokale Härte einer Holzoberfläche zu messen.

Gemäß einer bevorzugten Variante des erfindungsgemäßen Verfahrens wird das Licht von der Beleuchtungsquelle, mittels der die Fehler im Innern der transparenten Schutzschicht erfaßt werden sollen, in Form einer Linie auf die Oberfläche der durchsichtigen Schutzschicht abgebildet. Durch die Rückstreuung im Bereich der fehlerhaften Stellen wird die Linie in diesen Bereichen verbreitert. Die Verbreiterung wird von dem bildgebenden Sensor, der dieser Beleuchtungsquelle zugeordnet ist, beispielsweise eine schwarz-weiß Kamera, erfaßt. Dadurch können fehlerhafte Stellen ermittelt werden.

Das vollständige Fehlen der durchsichtigen Schutzschicht 14 kann mit dem Streueffekt nicht erkannt werden. Es kann insbesondere bei geprägten Oberflächen auch nicht mit dem Reflexkanal 22 erkannt werden, weil die geprägte Oberfläche ein Bildrauschen erzeugt, welches den Unterschied zwischen dem Glanz einer vorhandenen Schutzschicht 14 und dem niedrigeren Glanz des bei fehlender Schutzschicht 14 beleuchteten Dekorpapiers 12 überlagert.

Erfindungsgemäß wird hierzu nach Figur 4 die Fluoreszenz der Schutzschicht 14 ausgenützt. Hierzu wird die Oberfläche mit kurzwelligem Licht einer Beleuchtungsquelle 46 bestrahlt, deren Wellenlängenbereich $\lambda_1$ am unteren Ende der Empfindlichkeit der beobachtenden Kamera liegt. Die Fluoreszenz der intakten Schutzschicht 14 führt zu einem zurückgestrahlten Licht mit einer größeren Wellenlänge $\lambda_2$, die im empfindlicheren Bereich der beobachtende Kamera liegt. Die Schutzschicht 14 erscheint damit leicht hell.

Fehlende Stellen 50, sogenannte Overlay-Platzer, sind dagegen dunkel, da das reflektierende Dekorpapier 52 keine Fluoreszenzeigenschaften aufzeigt und damit das rückgestrahlte Licht die gleiche Wellenlänge $\lambda_1$ aufweist wie das von der Beleuchtungsquelle 46 emittierte Licht.

Fehlende Stellen der durchsichtigen Schutzschicht können auch dadurch erkannt werden, daß das kurzwellige, von der Beleuchtungsquelle emittierte Licht in Form einer Linie auf die zu kontrollierende Oberfläche abgebildet wird. In Bereichen, in denen die farblich gemusterte Oberfläche von der durchsichtigen Schutzschicht bedeckt ist, verändert das von der Schutzschicht emittierte Fluoreszenzlicht das Bild der auf die Oberfläche projizierten Linie. Ist die Empfindlichkeit der erfassenden Kamera im Bereich des Fluoreszenzlichts größer als im Bereich des anregenden Lichts, erscheint die Linie heller in Bereichen, die von der Schutzschicht bedeckt sind als in Bereichen, die nicht von der Schutzschicht bedeckt sind.

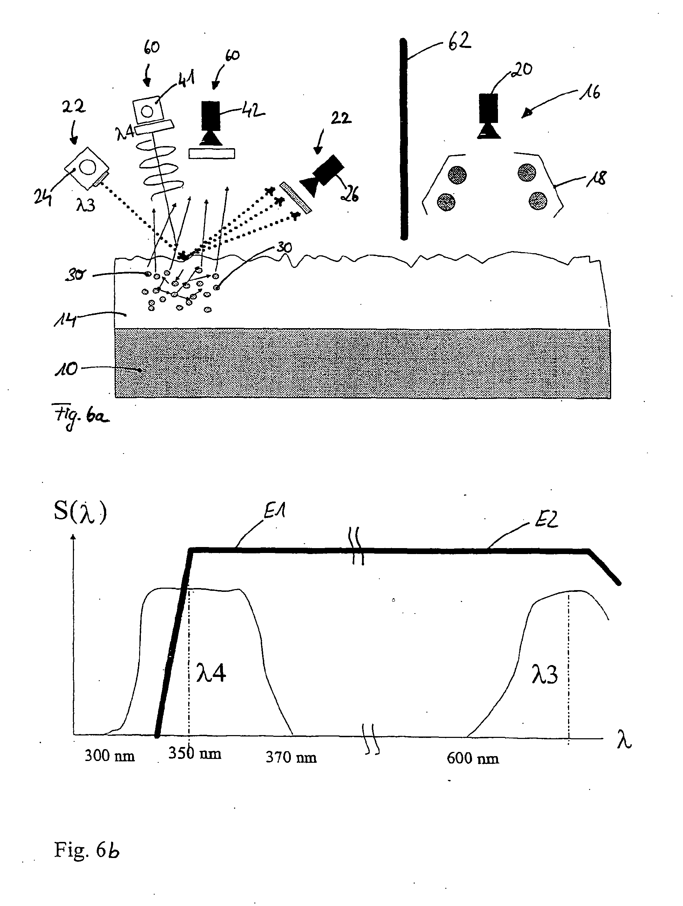

Bevorzugterweise werden für die Beleuchtung der Laminatoberfläche sogenannte Schwarzlicht-Lampen eingesetzt, welche sowohl einen die Fluoreszenz der Schutzschicht anregenden Ultraviolett-Anteil besitzen als auch einen kurzwelligen sichtbaren Anteil abstrahlen. Damit können mit einer einzigen Beleuchtungsquelle und einer einzigen Kamera 42 (siehe auch Figur 6a) sowohl die Milchigkeitsdefekte im Innern der durchsichtigen Schutzschicht anhand der lokal höheren Streuung als helle Bildstellen erkannt werden als auch das lokale Fehlen der durchsichtigen Schutzschicht infolge der lokal fehlenden Fluoreszenz als dunkle Stellen auf einem insgesamt leicht hellen Hintergrund erkannt werden.

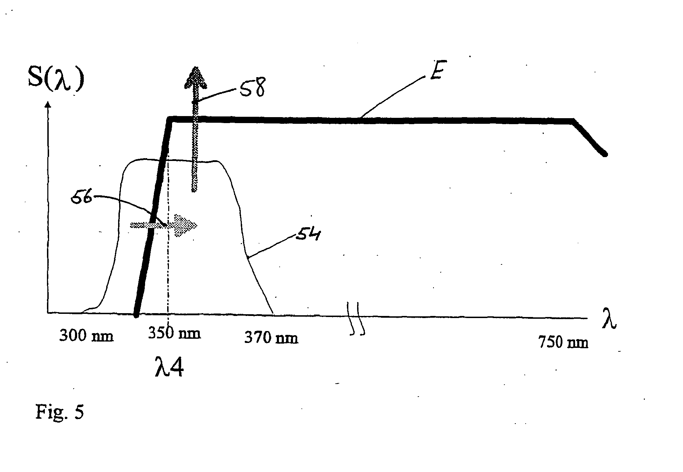

In Figur 5 ist schematisch das Spektrum S($\lambda$) der Beleuchtungsquelle 41 zusammen mit der Empfindlichkeitskennlinie E der Kamera zu sehen, welche erforderlich sind, um Fehler 30 im Innern der Schutzschicht 14 bis zum vollständigen Fehlen der Schutzschicht 14 durch gleichzeitige Ausnützung von Streuung und Fluoreszenz zu erkennen.

Die kurzwellige Schwarzlicht-Beleuchtungsquelle hat beispielsweise die spektrale Einissionskennlinie 54, die um die mittlere Wellenlänge $\lambda_4$ zentriert ist. Die beobachtende schwarz-weiß Kamera hat eine Empfindlichkeitskennlinie E, die vom kurzwelligen Blau bis hin zu Rot reicht. Aus Gründen der einfacheren Erklärung wird diese Kennlinie E als konstant angesehen, bis auf den wichtigen ansteigenden Ast bei 350 nm.

Die Fluoreszenz der Schutzschicht 14 verschiebt die spektralen, für die Kamera unsichtbaren oder wenig empfindlichen Wellenlängen in den Bereich höherer Kameraempfindlichkeit, wie durch den Pfeil 56 angedeutet ist. Die unversehrte Schutzschicht erscheint damit leicht hell, und die fehlende Schutzschicht erscheint dunkel. Die Streuung durch milchige Melaninpartikel in der Schutzschicht vergrößert die Reflexion im kurzwelligen violettblau der Beleuchtungsquelle, wie durch den Pfeil 58 angedeutet ist. Melaninflecke und leichte Milchigkeit erscheinen daher als deutlich hellere Zonen.

Figur 6a zeigt beispielhaft eine Anordnung der drei Bildkanäle "Farbkanal" 16, "Reflexkanal" 22 und "Overlay-Kanal" 60. Die optische Isolierung zwischen dem Farbkanal 16 und den übrigen beiden Kanälen 22 bzw. 60 wird durch eine Abschottung 62 des diffusen Weißlichtes durchgeführt. Um die Einbauverhältnisse an der Produktionslinie möglichst klein zu halten, wird erfindungsgemäß die optische Isolierung des Reflexkanals 22 und des Overlay-Kanals 60 durch eine spektrale Trennung der Reflexbeleuchtung und der Overlay-Beleuchtung durchgeführt. Die gerichtete Beleuchtungsquelle 24 des Reflexkanals 22 wird auf einen Wellenlängenbereich $\lambda_3$ (siehe auch Figur 6b) ausgelegt, welcher sich mit dem kurzwelligen Wellenlängenbereich $\lambda_4$ der Beleuchtungsquelle 41 des Overlay-Kanals 60 nicht überschneidet.

Vorzugsweise wird daher $\lambda_3$ in den ROT- oder Nahinfrarot-Bereich verlegt. Gleichzeitig wird die Kamera 26 des Reflexkanals 22 mit einem optischen Bandpaßfilter mit dem gleichen Durchlaßbereich $\lambda_3$ versehen, um unempfindlich gegenüber der Beleuchtung des Overlay-Kanals zu werden. Analog wird die Kamera 42 des Overlay-Kanals 60 mit einem optischen Filter mit dem Durchlaßbereich $\lambda_4$ versehen, welcher nur die kurzwellige Rückstrahlung und Fluoreszenz durchläßt. Diese Verhältnisse sind nochmals im spektralen Diagramm der Figur 6b verdeutlicht, wobei die Empfindlichkeitskennlinie entsprechend dem emittierten Spektrum in zwei Teile E1 und E2 aufgeteilt ist, die jeweils dem entsprechenden Empfindlichkeitsbereich E1 bzw. E2 der Kamera 42 des Overlay-Kanals 60 und der Kamera 26 des Reflexkanals 22 entsprechen.

Durch diese spektrale Trennung ergeben sich zwei entscheidende Vorteile: die geometrischen Einbauverhältnisse verringern sich deutlich und die beiden Kanäle "Reflex" und "Overlay" beobachten den gleichen Ort des Laminats. Ihre Bildsignale können daher im Sinne einer multisensorialen und multidimensionalen Signalverarbeitung zu einem 2-kanaligen Bildsignal zusammengefaßt werden und mit den Verfahren der mehrdimensionalen Mustererkennung ausgewertet werden. Diese mehrdimensionale Bildverarbeitung wird bereits in der oben genannten deutschen Patentanmeldung DE 196 09 045 C1 beschrieben.

Die Erklärung des Erfindungsgedankens anhand von ebenen Holzlaminatoberflächen und die Verwendung von Kameras bedeuten nicht, daß der Erfindungsgedanke auf diese Materialien und diese Bildgeber beschränkt ist. Es ist für den Fachmann der Bildverarbeitung selbstverständlich, diesen Erfindungsgedanken und die Anordnung auf andere farbige Oberflächen, bestehend aus anderen Materialien mit durchsichtigen Schutzschichten, die sowohl eben als auch nicht eben sind, anzuwenden und andere Bildgeber als Kameras einzusetzen. Die vorliegende Erfindung läßt sich ebenso anwenden auf optische Oberflächeninspektionssysteme mit 3D-Kanälen, Röntgen-Kanälen u.ä., welche Oberflächen inspizieren, welche mit durchsichtigen Schutzschichten versehen sind.

## Patentansprüche

1. Verfahren zur optischen Kontrolle einer durchsichtigen Schutzschicht (14) und einer farblich gemusterten Oberfläche (12), wobei die durchsichtige Schutzschicht (14) zumindest teilweise die farblich gemusterte Oberfläche (12) bedeckt, mit einer ersten Beleuchtungsquelle (40) und mit einem der ersten Beleuchtungsquelle zugeordneten bildgebenden Sensor (42) zur Erkennung von fehlerhaften Stellen (30) im Innern der durchsichtigen Schutzschicht (14), wobei die fehlerhaften Stellen (30) trübe Stellen in der durchsichtigen Schutzschicht (14) sind, wobei die Schutzschicht (14) mit von der Beleuchtungsquelle (40) emittiertem Licht mit einem Wellenlängenbereich im unmittelbar an den von dem bildgebenden Sensor (42) nicht mehr erfaßten Ultraviolett-Bereich anschließenden Blau-Bereich beleuchtet wird, wobei das auf die Oberfläche auftreffende Licht zumindest teilweise in die Schutzschicht (14) eindringt und an den fehlerhaften Stellen (30) gestreut wird, wobei an den fehlerhaften Stellen (30) rückgestreutes Licht von dem bildgebenden Sensor (42) erfaßt wird und wobei die fehlerhaften Stellen (30) durch die lokale Zunahme der Intensität des von dem bildgebenden Sensor (42) erfaßten Lichts im Bereich der fehlerhaften Stellen (30) erkannt werden.

2. Verfahren nach Anspruch 1, **dadurch gekennzeichnet, daß** der der ersten Beleuchtungsquelle (40) zugeordnete bildgebende Sensor (42) im wesentlichen nur im Wellenlängenbereich des von der ersten Beleuchtungsquelle (40) emittierten Lichts empfindlich ist.

3. Verfahren nach einem der Ansprüche 1 bis 2, **dadurch gekennzeichnet, daß** die erste Beleuchtungsquelle (40) und der der ersten Beleuchtungsquelle (40) zugeordnete bildgebende Sensor (42) senkrecht über der Oberfläche der durchsichtigen Schutzschicht (14) angeordnet sind.

4. Verfahren nach einem der Ansprüche 1 bis 3, **dadurch gekennzeichnet, daß** das von der ersten Beleuchtungsquelle (40) emittierte Licht in Form einer Linie auf die Oberfläche der durchsichtigen Schutzschicht (14) abgebildet wird und daß die durch das rückgestreute Licht im Bereich der fehlerhaften Stellen (30) bedingte Verbreiterung der Linie auf der Oberfläche der Schutzschicht (14) durch den bildgebenden Sensor (42) erfaßt wird.

5. Verfahren nach einem der Ansprüche 1 bis 4, **dadurch gekennzeichnet, daß** eine zweite Beleuchtungsquelle (46) vorgesehen ist, die Licht mit einer ersten Wellenlänge ($\lambda_1$) emittiert, das die Schutzschicht (14) zur Fluoreszenz von Licht mit einer zweiten, von der ersten Wellenlänge unterschiedlichen

Wellenlänge ($\lambda_2$) anregt, daß das Fluoreszenzlicht durch einen der zweiten Beleuchtungsquelle (46) zugeordneten bildgebenden Sensor erfaßt wird, und daß fehlerhafte Stellen (50) in der durchsichtigen Schutzschicht (14) durch lokale Änderungen der Intensität des Fluoreszenzlichts erkannt werden.

6. Verfahren nach Anspruch 5, **dadurch gekennzeichnet, daß** der der zweiten Beleuchtungsquelle (46) zugeordnete bildgebende Sensor im Wellenlängenbereich der zweiten Wellenlänge ($\lambda_2$) eine höhere Empfindlichkeit aufweist als im Wellenlängenbereich der ersten Wellenlänge ($\lambda_1$).

7. Verfahren nach einem der Ansprüche 5 oder 6, **dadurch gekennzeichnet, daß** das von der zweiten Beleuchtungsquelle (46) emittierte Licht in Form einer Linie auf die Oberfläche der durchsichtigen Schutzschicht (14) abgebildet wird und daß die durch Änderungen der Intensität des Fluoreszenzlichts bedingte Änderung der Intensität der Linie auf der Oberfläche der transparenten Schutzschicht (14) von dem bildgebenden Sensor erfaßt wird.

8. Verfahren nach einem der Ansprüche 5 bis 7, **dadurch gekennzeichnet, daß** die fehlerhaften Stellen (50) Bereiche auf der farblich gemusterten Oberfläche sind, die nicht von der durchsichtigen Schutzschicht (14) bedeckt sind.

9. Verfahren nach einem der vorhergehenden Ansprüche, **dadurch gekennzeichnet, daß** als erste Beleuchtungsquelle (40) und als zweite Beleuchtungsquelle (46) eine einzige Beleuchtungsquelle (41) verwendet wird.

10. Verfahren nach einem der vorhergehenden Ansprüche, **dadurch gekennzeichnet, daß** Farbfehler in der farblich gemusterten Oberfläche (12) durch einen farbfähigen bildgebenden Sensor (20) erfaßt werden.

11. Verfahren nach einem der vorhergehenden Ansprüche, **dadurch gekennzeichnet, daß** zur Erfassung von Fehlern an der Oberfläche der durchsichtigen Schutzschicht (14) ein gerichteter, von einer dritten Beleuchtungsquelle (24) emittierter Lichtstrahl an der Oberfläche der Schutzschicht (14) reflektiert wird, daß das reflektierte Licht von einem der dritten Beleuchtungsquelle (24) zugeordneten bildgebenden Sensor (26) erfaßt wird, und daß die Fehler an der Oberfläche der transparenten Schutzschicht (14) durch Änderungen der Intensität des von dem bildgebenden Sensor (26) erfaßten Lichts erkannt werden.

12. Verfahren nach einem der vorhergehenden Ansprüche, **dadurch gekennzeichnet, daß** verschiedene bildgebende Sensoren (20, 26, 42) mit den jeweiligen zugeordneten Beleuchtungsquellen (18, 24, 41) voneinander abgeschirmt sind.

13. Verfahren nach Anspruch 12, **dadurch gekennzeichnet, daß** die verschiedenen bildgebenden Sensoren (20, 26, 42) mit den jeweiligen zugeordneten Beleuchtungsquellen (18, 24, 41) **dadurch** voneinander abgeschirmt sind, daß sie in unterschiedlichen, nicht überlappenden Wellenlängenbereichen arbeiten.

14. Verfahren nach Anspruch 13, **dadurch gekennzeichnet, daß** die erste (41) und dritte (24) Beleuchtungsquelle Licht in unterschiedlichen, nicht überlappenden Wellenlängenbereichen emittieren, und daß die der ersten bzw. dritten Beleuchtungsquelle (41, 24) zugeordneten bildgebenden Sensoren (42, 26) in unterschiedlichen, nicht überlappenden Wellenlängenbereichen empfindlich sind.

15. Verfahren nach einem der vorhergehenden Ansprüche, **dadurch gekennzeichnet, daß** die farblich gemusterten Oberflächen (12) und die durchsichtige Schutzschicht (14) Teile von Laminatbodenelementen sind, wobei die Laminatbodenelemente Trägerelemente (10) aus Holz oder Kunststoff umfassen, auf denen mehrfarbig bedruckte Folien (11) mit einer farblich gemusterten Oberfläche (12) angeordnet sind, die von einer durchsichtigen Schutzschicht (14) bedeckt sind.

16. Verfahren nach einem der vorhergehenden Ansprüche, **dadurch gekennzeichnet, daß** die Oberfläche der durchsichtigen Schutzschicht (14) mit einer eingeprägten Struktur versehen ist.

17. Anordnung Verwendung einer eine mit ersten Beleuchtungsquelle (40) und einem der ersten Beleuchtungsquelle (40) zugeordneten bildgebenden Sensor (42) wobei das Emissionsspektrum der ersten Beleuchtungsquelle (40) einen Wellenlängenbereich im unmittelbar an den von dem bildgebenden Sensor (42) nicht mehr erfassten Ultraviolett-Bereich anschließenden Blau-Bereich aufweist, **dadurch, gekennzeichnet, daß** die Verwendung die optische Kontrolle einer durchsichtigen Schutzschicht (14) und einer farblich gemusterten Oberfläche (12) ist bei der die durchsichtige Schutzschicht (14) zumindest teilweise die farblich gemusterte Oberfläche (12) bedeckt, wobei der bildgebende Sensor (42) an fehlerhaften Stellen (30) im Innern der durchsichtigen Schutzschicht (14), wobei die fehlerhaften Stellen (30) trübe Stellen in der durchsichtigen Schutzschicht (14) sind, rückgestreutes Licht erfaßt und die fehlerhaften Stellen (30) durch die lokale Zunahme der Intensität des von dem bildgebenden Sensor (42) erfaßten Lichts im Bereich der fehlerhaften Stellen (30) erkannt werden können.

**Claims**

1. A method for the optical inspection of a transparent protective layer (14) and of a colored patterned surface (12), the transparent protective layer (14) at least partially covering the colored patterned surface (12), comprising a first source of illumination (40) and an imaging sensor (42) that is associated with the first source of illumination to recognize sites of defect (30) inside the transparent protective layer (14), the sites of defect (30) being turbid zones in the transparent protective layer (14), the protective layer (14) being illuminated with light emitted by the source of illumination (40) with a wavelength range in the blue region that directly follows the ultraviolet region that is no longer detected by the imaging sensor (42), the light striking the surface penetrating at least partially into the protective layer (14) and being scattered at the sites of defect (30), with light that is scattered back from the sites of defect (30) being picked up by the imaging sensor (42), and the sites of defect (30) being recognized based on the local increase in the intensity of the light picked up by the imaging sensor (42) in the area of the sites of defect (30).

2. The method according to claim 1, **characterized in that** the imaging sensor (42) associated with the first source of illumination (40) is essentially only sensitive to light emitted in the wavelength range of the first source of illumination (40).

3. The method according to either of claims 1 to 2, **characterized in that** the first source of illumination (40) and the imaging sensor (42) associated with the first source of illumination (40) are arranged perpendicularly above the surface of the transparent protective layer (14).

4. The method according to any of claims 1 to 3, **characterized in that** the light emitted by the first source of illumination (40) is imaged in the form of a line on the surface of the transparent protective layer (14) and **in that** the widening of the line caused by the back-scattered light in the area of the sites of defect (30) is detected on the surface of the protective layer (14) by the imaging sensor (42).

5. The method according to any of claims 1 to 4, **characterized in that** a second source of illumination (46) is provided that emits light at a first wavelength ($\lambda_1$) that excites the protective layer (14) to fluoresce with light at a second wavelength ($\lambda_2$) that is different from the first wavelength, **in that** the fluorescent light is picked up by an imaging sensor associated with the second source of illumination (46), and **in that** sites of defect (50) in the transparent protective layer (14) are recognized on the basis of local changes in the intensity of the fluorescent light.

6. The method according to claim 5, **characterized in that** the imaging sensor associated with the second source of illumination (46) has a greater sensitivity in the wavelength range of the second wavelength ($\lambda_2$) than in the wavelength range of the first wavelength ($\lambda_1$).

7. The method according to either of claims 5 or 6, **characterized in that** the light emitted by the second source of illumination (46) is imaged in the form of a line on the surface of the transparent protective layer (14) and **in that** the change in the intensity of the line on the surface of the transparent layer (14) caused by changes in the intensity of the fluorescent light is detected by the imaging sensor.

8. The method according to any of claims 5 to 7, **characterized in that** the sites of defect (50) are areas on the colored patterned surface which are not covered by the transparent protective layer (14).

9. The method according to any of the preceding claims, **characterized in that** a single source of illumination (41) is employed as the first source of illumination (40) and as the second source of illumination (46).

10. The method according to any of the preceding claims, **characterized in that** color defects in the colored patterned surface (12) are detected by a color-capable imaging sensor (20).

11. The method according to any of the preceding claims, **characterized in that**, in order to detect defects on the surface of the transparent protective layer (14), a directed beam of light emitted by a third source of illumination (24) is reflected off the surface of the protective layer (14), **in that** the reflected light is picked up by an imaging sensor (26) associated with the third source of illumination (24), and **in that** the defects on the surface of the transparent protective layer (14) are recognized on the basis of changes in the intensity of the light picked up by the imaging sensor (26).

12. The method according to any of the preceding claims, **characterized in that** various imaging sensors (20, 26, 42) with the respectively associated sources of illumination (18, 24, 41) are shielded from each other.

13. The method according to claim 12, **characterized**

**in that** the various imaging sensors (20, 26, 42) with the respectively associated sources of illumination (18, 24, 41) are shielded from each other **in that** they operate at different, non-overlapping wavelength ranges.

14. The method according to claim 13, **characterized in that** the first (41) and third (24) sources of illumination emit light in different, non-overlapping wavelength ranges and **in that** the imaging sensors (42, 26) associated with the first and, respectively, third sources of illumination (41, 24) are sensitive in different, non-overlapping wavelength ranges.

15. The method according to any of the preceding claims, **characterized in that** the colored patterned surfaces (12) and the transparent protective layer (14) are parts of laminate floor covering elements, the laminate floor covering elements comprising wood or plastic substrate elements (10) on which multicolored printed films (11) with a colored patterned surface (12) are arranged which are covered by a transparent protective layer (14).

16. The method according to any of the preceding claims, **characterized in that** the surface of the transparent protective layer (14) is provided with an embossed structure.

17. Use of an arrangement comprising a first source of illumination (40) and an imaging sensor (42) associated with the first source of illumination (40), the emission spectrum of the first source of illumination (40) having a wavelength range in the blue region that directly follows the ultraviolet region that is no longer detected by the imaging sensor (42), **characterized in that** the use is the optical inspection of a transparent protective layer (14) and of a colored patterned surface (12) in which the transparent protective layer (14) at least partially covers the colored patterned surface (12), the imaging sensor (42) picking up light that is scattered back from sites of defect (30) inside the transparent protective layer (14), the sites of defect (30) being turbid zones in the transparent protective layer (14), and the sites of defect (30) being adapted to be recognized based on the local increase in the intensity of the light picked up by the imaging sensor (42) in the area of the sites of defect (30).

**Revendications**

1. Procédé de contrôle optique d'une couche de protection (14) transparente et d'une surface (12) à motifs colorés, la couche de protection (14) transparente recouvrant au moins partiellement la surface (12) à motifs colorés, au moyen d'une première source d'éclairage (40) et d'un capteur imageur (42) associé à la première source d'éclairage pour la détection d'endroits défectueux (30) à l'intérieur de la couche de protection (14) transparente, les endroits défectueux (30) étant des endroits brouillés dans la couche de protection (14) transparente, la couche de protection (14) étant éclairée par de la lumière émise par la source d'éclairage (40) présentant une plage de longueurs d'onde dans la zone bleue directement adjacente à la zone ultraviolette qui n'est plus détectée par le capteur imageur (42), la lumière incidente sur la surface pénétrant au moins partiellement dans la couche de protection (14) et étant diffusée aux endroits défectueux (30), la lumière rétrodiffusée aux endroits défectueux (30) étant détectée par le capteur imageur (42), et les endroits défectueux (30) étant identifiés par l'augmentation locale de l'intensité de la lumière détectée par le capteur imageur (42) dans la zone des endroits défectueux (30).

2. Procédé selon la revendication 1, **caractérisé en ce que** le capteur imageur (42) associé à la première source d'éclairage (40) est sensible essentiellement uniquement dans la plage de longueurs d'onde de la lumière émise par la première source d'éclairage (40).

3. Procédé selon l'une des revendications 1 à 2, **caractérisé en ce que** la première source d'éclairage (40) et le capteur imageur (42) associé à la première source d'éclairage (40) sont agencés perpendiculairement au-dessus de la surface de la couche de protection (14) transparente.

4. Procédé selon l'une des revendications 1 à 3, **caractérisé en ce que** la lumière émise par la première source d'éclairage (40) est représentée sous forme de ligne sur la surface de la couche de protection (14) transparente et **en ce que** l'élargissement de la ligne sur la surface de la couche de protection (14) dû à la lumière rétrodiffusée dans la zone des endroits défectueux (30) est détecté par le capteur imageur (42).

5. Procédé selon l'une des revendications 1 à 4, **caractérisé en ce qu'**il est prévu une deuxième source d'éclairage (46) émettant de la lumière à une première longueur d'onde ($\lambda_1$) excitant la couche de protection (14) par fluorescence de lumière à une deuxième longueur d'onde ($\lambda_2$) différente de la première longueur d'onde, **en ce que** la lumière fluorescente est détectée par un capteur imageur associé à la deuxième source d'éclairage (46), et **en ce que** des endroits défectueux (50) dans la couche de protection (14) transparente sont identifiés par des changements locaux de l'intensité de la lumière fluorescente.

**6.** Procédé selon la revendication 5, **caractérisé en ce que** le capteur imageur associé à la deuxième source d'éclairage (46) présente dans la plage de longueurs d'onde de la deuxième longueur d'onde ($\lambda_2$) une sensibilité plus élevée que dans la plage de longueurs d'onde de la première longueur d'onde ($\lambda_1$).

**7.** Procédé selon l'une des revendications 5 ou 6, **caractérisé en ce que** la lumière émise par la deuxième source d'éclairage (46) est représentée sous forme de ligne sur la surface de la couche de protection (14) transparente, et **en ce que** le changement de l'intensité de la ligne sur la surface de la couche de protection (14) transparente dû à des changements de l'intensité de la lumière fluorescente est détecté par le capteur imageur.

**8.** Procédé selon l'une des revendications 5 à 7, **caractérisé en ce que** les endroits défectueux (50) sont des zones sur la surface à motifs colorés qui ne sont pas recouvertes par la couche de protection (14) transparente.

**9.** Procédé selon l'une des revendications précédentes, **caractérisé en ce qu'**une seule source d'éclairage (41) est utilisée en tant que première source d'éclairage (40) et en tant que deuxième source d'éclairage (46).

**10.** Procédé selon l'une des revendications précédentes, **caractérisé en ce que** des défauts de couleur dans la surface (12) à motifs colorés sont détectés par un capteur imageur (20) de couleurs.

**11.** Procédé selon l'une des revendications précédentes, **caractérisé en ce que** pour la détection de défauts sur la surface de la couche de protection (14) transparente, un rayon lumineux dirigé émis par une troisième source d'éclairage (24) est reflété sur la surface de la couche de protection (14), **en ce que** la lumière reflétée est détectée par un capteur imageur (26) associé à la troisième source d'éclairage (24), et **en ce que** les défauts sur la surface de la couche de protection (14) transparente sont identifiés par des changements de l'intensité de la lumière détectée par le capteur imageur (26).

**12.** Procédé selon l'une des revendications précédentes, **caractérisé en ce que** différents capteurs imageurs (20, 26, 42), avec les sources d'éclairage (18, 24, 41) associées respectives, sont écrantés les uns des autres.

**13.** Procédé selon la revendication 12, **caractérisé en ce que** les différents capteurs imageurs (20, 26, 42) avec les sources d'éclairage (18, 24, 41) associées respectives sont écrantés les uns des autres en fonctionnant dans différentes plages de longueurs d'onde qui ne se recouvrent pas.

**14.** Procédé selon la revendication 13, **caractérisé en ce que** la première (41) et la troisième source d'éclairage (24) émettent de la lumière dans différentes plages de longueurs d'onde qui ne se recouvrent pas, et **en ce que** les capteurs imageurs (42, 26) associés à la première et à la troisième source d'éclairage (41, 24), respectivement, sont sensibles dans différentes plages de longueurs d'onde qui ne se recouvrent pas.

**15.** Procédé selon l'une des revendications précédentes, **caractérisé en ce que** les surfaces (12) à motifs colorés et la couche de protection (14) transparente font partie d'éléments de plancher en stratifié, les éléments de plancher en stratifié comprenant des éléments de support (10) en bois ou en matière plastique sur lesquels sont agencées des feuilles imprimées multicolores (11) qui présentent une surface (12) à motifs et qui sont recouvertes d'une couche de protection (14) transparente.

**16.** Procédé selon l'une des revendications précédentes, **caractérisé en ce que** la surface de la couche de protection (14) transparente est pourvue d'une structure estampée.

**17.** Utilisation d'un agencement présentant une première source d'éclairage (40) et un capteur imageur (42) associé à la première source d'éclairage (40), le spectre d'émission de la première source d'éclairage (40) présentant une plage de longueurs d'onde dans la zone bleue directement adjacente à la zone ultraviolette qui n'est plus détectée par le capteur imageur (42), **caractérisée en ce que** l'utilisation est le contrôle optique d'une couche de protection (14) transparente et d'une surface (12) à motifs colorés, la couche de protection (14) transparente recouvrant au moins partiellement la surface (12) à motifs colorés, le capteur imageur (42) détectant à des endroits défectueux (30) à l'intérieur de la couche de protection (14) transparente de la lumière rétrodiffusée, les endroits défectueux (30) étant des endroits brouillés dans la couche de protection (14) transparente, et **en ce que** les endroits défectueux (30) peuvent être identifiés par l'augmentation locale de l'intensité de la lumière détectée par la capteur imageur (42) dans la zone des endroits défectueux (30).

Fig. 1

Fig. 2

EP 1 585 979 B1

Fig. 3

Fig. 4

13

Fig. 5

Fig. 6a

Fig. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19609045 C1
- US 5459330 A
- US 4725139 A
- US 20030011760 A1
- US 20020135758 A1
- EP 1016862 A1
- JP 2000094402 B